(19) Europäisches Patentamt / European Patent Office / Office européen des brevets

(11) **EP 4 610 147 A1**

(12) **EUROPEAN PATENT APPLICATION**
published in accordance with Art. 153(4) EPC

(43) Date of publication:
**03.09.2025 Bulletin 2025/36**

(21) Application number: **23897194.9**

(22) Date of filing: **08.09.2023**

(51) International Patent Classification (IPC):
**B62D 25/04** $^{(2006.01)}$     **B21D 22/20** $^{(2006.01)}$
**B21D 22/26** $^{(2006.01)}$     **B21D 53/88** $^{(2006.01)}$

(52) Cooperative Patent Classification (CPC):
**B21D 22/20; B21D 22/26; B21D 53/88; B62D 25/04**

(86) International application number:
**PCT/JP2023/032797**

(87) International publication number:
**WO 2024/116535 (06.06.2024 Gazette 2024/23)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **30.11.2022 JP 2022191294**
**30.11.2022 JP 2022191295**

(71) Applicant: **JFE Steel Corporation**
**Tokyo 100-0011 (JP)**

(72) Inventors:
• **NAKAGAWA Kinya**
**Tokyo 100-0011 (JP)**
• **SHINMIYA Toyohisa**
**Tokyo 100-0011 (JP)**
• **YAMASAKI Yuji**
**Tokyo 100-0011 (JP)**

(74) Representative: **Grünecker Patent- und Rechtsanwälte PartG mbB**
**Leopoldstraße 4**
**80802 München (DE)**

(54) **STRUCTURAL COMPONENT FOR AUTOMOBILE, AND METHOD FOR MANUFACTURING PRESSED COMPONENT**

(57)     There is provided a technology of simply forming a pressed component with high designability without reducing productivity. A component, being a press formed article containing a steel sheet as a material, has: a top sheet portion (2); a vertical wall portion (3) contiguous to the top sheet portion (2) via a ridge portion (5); and a corner portion (4) coupling right and left end portions of the adjacent vertical wall portions (3) and having a ridge portion (5) in a circular arc shape projecting outward as viewed from the top sheet portion (2) side, in which, for the radius of curvature of each of the ridge portions (5) from the top sheet portion (2) to the vertical wall portion (3) and the corner portion (4), when the radius of curvature in the corner portion (4) is defined as R1 [mm], a radius of curvature R2 [mm] in the vertical wall portion (3) coupled to the corner portion (4) satisfies the condition of Formula (1),

$$5.0 \geq R1/R2 \geq 1.2 \cdots (1).$$

FIG. 1

EP 4 610 147 A1

**Description**

Technical Field

The present invention relates to an automotive structural component, and a method for manufacturing a steel pressed component, such as an automotive structural component. The present invention is a technology suitable for a pressed component containing, for example, a high-strength steel sheet with a tensile strength of 980 MPa or more, particularly an ultrahigh-strength steel sheet with a tensile strength of 1470 MPa or more.

Background Art

One of the performances required in the automotive structural component includes an improvement of collision safety. Therefore, the automotive structural component tends to be manufactured using a high-strength steel sheet as a material. When the automotive structural component is manufactured by press forming using a high-strength steel sheet as the material, the component can be formed into a shape with high rigidity, and therefore collision safety can be enhanced. However, there is such a problem that, generally, the higher the strength of the material, the more difficult it becomes to form the shape with high rigidity.
Conventionally, various press forming methods have been developed to solve the above-described problem.
For example, according to a method described in PTL 1, a technology is disclosed which includes dividing a step for forming a target shape into a plurality of steps and optimizing the shape in each step, thereby improving formability.
Further, PTL 2 discloses a technology which includes heating and softening a material to improve press formability, and, after the heating and softening, quenching the material in a die. PTL 2 describes that this ensures strength, so that a component with high strength and high designability is manufactured.

Citation List

Patent Literatures

    PTL 1: JP 5867657 B
    PTL 2: JP 5952881 B

Summary of Invention

Technical Problem

Herein, for example, a component having a substantially L-shape in plan view, such as a lower portion of a front pillar lower, has a corner portion where end portions of adjacent vertical wall portions are joined to each other. The corner portion is formed by connecting the adjacent vertical wall portions and making a punch shoulder R small, so that the rigidity and the collision safety are improved. However, when such a shape is formed using a high-strength steel sheet with high rigidity, particularly an ultrahigh-strength steel sheet, there is a risk of the occurrence of cracking in a punch shoulder portion, making the forming difficult. Therefore, structures having divided vertical walls or having a corner portion with a large R have been adopted in many cases. Although such structures make it possible to implement press forming using an ultrahigh-strength steel sheet, the rigidity decreases due to the shape.
Therefore, it is difficult to achieve both the use of an ultrahigh-strength steel sheet for the material and the press forming into the shape with high rigidity.
Herein, the method described in PTL 1 can improve the formability by properly designing the formed shape in each step. However, the method described in PTL 1 requires an increase in the number of steps, which in turn poses problems of a decrease in productivity and an increase in die cost, for example.
The method described in PTL 2 can provide a product with high strength and high designability. However, the method described in PTL 2 requires heating a steel sheet to the transformation point or more before pressing, which requires high energy. Further, the method described in PTL 2 requires more time for heating and quenching, which reduces takt time, and thus has a problem of productivity.
The present invention focuses on the above-described respects, and aims to provide a technology of simply forming a pressed component with high designability without reducing productivity.

Solution to Problem

The present inventors have variously examined forming a shape having a square-cylindrical corner portion or a corner portion having an L-shaped outside to solve the above-described problems. Then, the present inventors have obtained a finding that cracking in the corner portion can be suppressed by designing (managing) the R (radius of curvature) of the corner portion and the R of a ridge portion in the vertical wall portion contiguous to the corner portion to have a proper relation. Further, the present inventors have obtained a finding that cracking in the corner portion can be suppressed by designing (managing) the height of the corner portion and the height of the ridge portion in the vertical wall portion contiguous to the corner portion to have a proper relation. Based on these findings, the inventors further investigated in detail a strain distribution in the vicinity of cracking of the component described above. Then, the present inventors have obtained a finding that the cracking in the above-described form is caused by the material of the corner portion being pulled toward a punch shoulder ridge portion. Then, the present inventors have obtained a finding that, to suppress this cracking, the movement of the material toward the punch shoulder ridge portion may be suppressed.

Based on such findings, in one aspect of the present invention, a radius of curvature R2 of the ridge portion in the vertical wall portion contiguous to the corner portion is set to be smaller than a radius of curvature R1 of the ridge portion in the corner portion, thereby suppressing the material movement toward the ridge portion. Thus, the shape is designed to suppress the cracking in the corner portion. Based on the above-described findings, in another aspect in the present invention, the height in the vertical wall portion contiguous to the corner portion is set to be smaller than the height in the corner portion, thereby suppressing the material movement toward the ridge portion. Thus, the shape is designed to suppress the cracking in the corner portion.

One aspect of the present invention is a component, being a press formed article containing a steel sheet as a material, having: a top sheet portion; a vertical wall portion contiguous to the top sheet portion via a ridge portion; and a corner portion coupling right and left end portions of the adjacent vertical wall portions and having a ridge portion in a circular arc shape projecting outward as viewed from the top sheet portion side, in which, for the radius of curvature of each of the ridge portions from the top sheet portion to the vertical wall portion and the corner portion, when the radius of curvature in the corner portion is defined as R1 [mm], a radius of curvature R2 [mm] in the vertical wall portion coupled to the corner portion satisfies the condition of Formula (1),

$$5.0 \geq R1/R2 \geq 1.2 \cdots (1).$$

Another aspect of the present invention is an automotive structural component, being a press formed article containing a steel sheet as a material, having: a top sheet portion; a vertical wall portion contiguous to the top sheet portion via a ridge portion; and a corner portion coupling right and left end portions of the adjacent vertical wall portions and having a ridge portion in a circular arc shape projecting outward as viewed from the top sheet portion side, in which, when the height of the corner portion is defined as h1 [mm], a height h2 [mm] of at least the vertical wall portion on the corner portion side of the vertical wall portions satisfies the condition of Formula (3),

$$15 \text{ mm} \geq h2 - h1 \geq 3 \text{ [mm]} \cdots (3).$$

Advantageous Effects of Invention

The aspects of the present invention can provide a pressed component in a shape having a small radius of curvature in the corner portion by a method simpler than conventional manufacturing methods.

Brief Description of Drawings

FIG. 1 is a view for explaining the shape of a pressed component according to a first embodiment based on the present invention;
FIG. 2 is a top view (view as viewed from a top sheet portion) for explaining a ridge portion of a pressed component according to an embodiment based on the present invention;
FIG. 3 is a schematic view for explaining press forming;
FIG. 4 is a view for explaining the shape of a pressed component according to a second embodiment based on the present invention;
FIG. 5 is a view for explaining the shape of a pressed component of Comparative Example 1;
FIG. 6 is a view illustrating the occurrence of strain and cracking in Comparative Example 1;

FIG. 7 is a view for explaining the shape of a pressed component of Example 1;

FIG. 8 is a view illustrating suppression of strain and cracking in Example 1;

FIG. 9 is a view for explaining the shape of a pressed component of Example 2;

FIG. 10 is a view illustrating suppression of strain and cracking in Example 2;

FIG. 11 is a view for explaining the shape of a pressed component of Example 3;

FIG. 12 is a view illustrating suppression of strain and cracking in Example 3;

FIG. 13 is a view for explaining the shape of a pressed component of Example 4; and

FIG. 14 is a view illustrating suppression of strain and cracking in Example 4.

Description of Embodiments

Next, embodiments of the present invention are described with reference to the drawings.

[First embodiment]

First, a first embodiment is described.

(Configuration)

A pressed component to which this embodiment is applicable is a component manufactured from a steel sheet by press forming.

Examples of a component shape to which the present invention is applicable include a component shape having a corner portion having a square cylindrical shape formed by stretch forming or having an L-shape in plan view and positioned on the L-shaped outside.

A pressed component 1 of the present invention is suitable for an automotive structural component, and further is suitable for a pressed component manufactured using a high-strength steel sheet for a steel sheet.

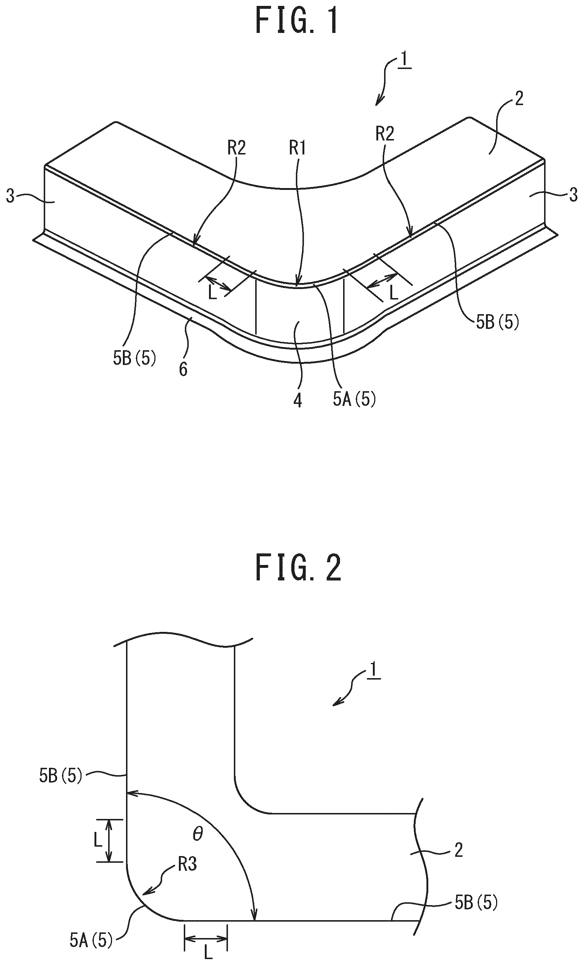

This embodiment gives a description taking a case where the pressed component 1 having portions illustrated in FIG. 1 is manufactured from a high-strength steel sheet by press forming as an example.

The shape of the pressed component 1 of this embodiment has a component shape having a top sheet portion 2, a vertical wall portion 3 contiguous to the top sheet portion 2 via a ridge portion 5B, and a corner portion 4 as illustrated in FIG. 1. The corner portion 4 couples right and left end portions of the adjacent vertical wall portions 3 and has a ridge portion 5A in a circular arc shape projecting outward as viewed from the top sheet portion 2 side. The "as viewed from the top sheet portion 2 side" is synonymous with "in plan view". When the top sheet portion 2 is positioned on the lower side, the top sheet portion 2 is synonymous with a bottom sheet portion. The reference sign 6 indicates a flange portion contiguous to a lower end portion of the vertical wall portion 3.

Herein, a ridge portion part connecting the top sheet portion 2 and the vertical wall portion 3 to each other is also referred to as the second ridge portion 5B. A ridge portion part connecting the top sheet portion 2 and the corner portion 4 is also referred to as the first ridge portion 5A. The first ridge portion 5A and the second ridge portion 5B are contiguous to each other.

The intersection angle θ (see FIG. 2) of the two adjacent vertical wall portions 3 contiguous to the corner portion 4 is set to, for example, 80° or more and 100° or less in plan view. The intersection angle θ is preferably 85° or more and 95° or less. The angle of the vertical wall portion 3 to the top sheet portion 2 is set to, for example, 80° or more and 100° or less. The angle is preferably 85° or more and 95° or less.

Then, in this embodiment, the radius of curvature along the vertical direction of each of the ridge portions 5 from the top sheet portion 2 to the vertical wall portion 3 and the corner portion 4 is designed as follows. More specifically, when the radius of curvature in the corner portion 4 is defined as R1 [mm], a radius of curvature R2 [mm] in each of the right and left vertical wall portions 3 coupled to the corner portion 4 is designed to satisfy the condition of Formula (1),

$$5.0 \geq R1/R2 \geq 1.2 \cdots (1).$$

Herein, the radius of curvature of the ridge portion 5 of the corner portion 4 (radius of curvature in a circular arc shape projecting outward) as viewed from the top sheet portion 2 side illustrated in FIG. 2 is defined as R3 [mm].

In this embodiment, the radius of curvature R1 of the first ridge portion 5A and the radius of curvature of the second ridge portion 5B are different from each other. Therefore, the connection between the first ridge portion 5A and the second ridge portion 5B has a section where the radius of curvature of the second ridge portion 5B is gradually changed along the extension direction of the ridge portion 5.

The section where the radius of curvature is gradually changed is set in the range of a distance L [mm] in the direction along the extension direction of the ridge portion 5 from a connection position where the vertical wall portion 3 is connected to the corner portion 4. The section with the distance L is also referred to as a gradual change section.

The distance L of the gradual change section is preferably set to satisfy "0.5 × R3 ≤ L ≤ 1.5 × R3".

This is for the following reasons. When the distance L is less than 0.5 × R3, the degree of the change in radius of curvature from R1 to R2 is excessively steep, which poses a risk that cracking occurs in a connection portion between the vertical wall portion 3 and the corner portion 4. When L is 1.5 × R3 or more, the change from R1 to R2 is excessively gradual, and therefore the movement of a material cannot be sufficiently inhibited, reducing the cracking suppression effect of the corner portion **4.**

At least the second ridge portion 5B satisfying Formula (1) above may be set in the gradual change section with the distance L. Specifically, at least a position farthest from the corner portion 4 of the gradual change section has the radius of curvature satisfying Formula (1).

More specifically, the range of the ridge portion 5 in the vertical wall portion 3 where the radius of curvature in the vertical wall portion 3 has R2 [mm] satisfying Formula (1) may be a range containing at least the range of the distance L [mm] in the direction along the extension direction of the ridge portion 5 from the coupling position with the corner portion 4 (see FIG. 1). The distance L is preferably designed to satisfy the following Formula (2),

$$0.5 \times R3 \leq L \leq 1.5 \times R3 \cdots (2).$$

More specifically, a region where the radius of curvature of the second ridge portion 5B is set to the radius of curvature R2 satisfying Formula (1) does not have to be the entire second ridge portion 5B of the vertical wall portion 3, and may be only a region in the vicinity of the corner portion 4. Specifically, a part of the second ridge portion 5B in the range of 1.5 × R3 from the connection portion of the first ridge portion 5A of the corner portion 4 to the second ridge portion 5B may satisfy the condition of the radius of curvature R2 described above. The radius of curvature of the second ridge portion 5B at a position further than 1.5 × R3 from the corner portion 4 can be set to any size.

Herein, the contour shapes of the ridge portions 5 each do not have to be a circular arc shape with the same radius of curvature. Each radius of curvature R1, R2, R3 takes, for example, the average radius of curvature of the circular arc shape along the target ridge portion 5. Alternatively, the radius of curvature in a center portion of the circular arc or the maximum radius of curvature value is applied.

(Manufacturing method)

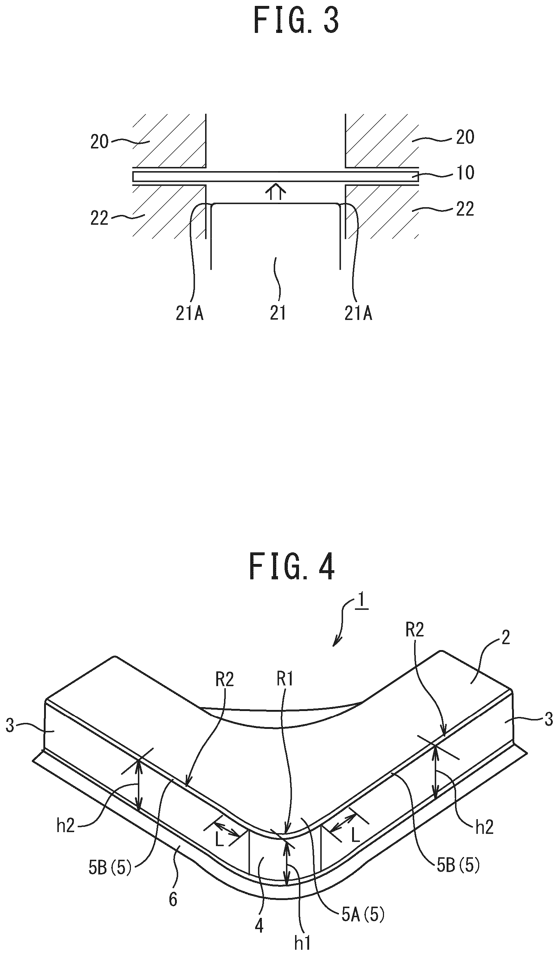

To the above-described pressed component 1, known press forming methods, such as stretch forming, may be applied. For example, a die including an upper die 20 and a punch 21 as illustrated in FIG. 3 is used. Then, a blank material 10 containing a steel sheet is restrained with the upper die 20 and a blank holder 22, and pressed by stroking the punch 21, thereby forming the blank material 10 into a target component shape. At this time, for example, the die is designed such that the punch shoulder R (reference sign 21A in FIG. 3) has the radius of curvature of the above-described press shape.

(Operation and others)

In this embodiment, for the radius of curvature in the vertical direction of the ridge portion 5, the radius of curvature R2 in the vertical wall portion 3 contiguous to the corner portion 4 is set to be smaller than the radius of curvature R1 in the corner portion 4.

This suppresses the material movement in the extension direction of the ridge portion 5 in the corner portion 4 more than before in press forming. As a result, even when a high-strength steel sheet is applied to the material, the material of the corner portion 4 is suppressed from being pulled to the ridge portion 5 side of the vertical wall portion 3 in the ridge portion 5, so that cracking in the corner portion 4 can be suppressed.

In this embodiment, the pressed component 1 with high designability can be simply formed without reducing productivity.

Herein, the relation between the radius of curvature R1 and the radius of curvature R2 is set to safety "5.0 ≥ R1/R2 ≥ 1.2".

When R1/R2 is less than 1.2, the difference between R1 and R2 is small, so that the effect of suppressing the material movement in the extension direction of the ridge portion 5 cannot be obtained. When R1/R2 is 5.0 or more, there is a risk that the radius of curvature R2 of the second ridge portion 5B in the vertical wall portion 3, i.e., the radius of curvature R2 of the second ridge portion 5B contiguous to the first ridge portion 5A of the corner portion 4, is excessively small, which increases a risk of the occurrence of cracking in the second ridge portion 5B.

[Second embodiment]

Next, a second embodiment is described.

This embodiment is described using the same reference signs for the same configurations as those in the first embodiment.

(Configuration)

A pressed component to which this embodiment is applicable is a component manufactured from a steel sheet by press forming.

Examples of a component shape to which the present invention is applicable include a component shape having a corner portion having a square cylindrical shape formed by stretch forming or having an L-shape in plan view and positioned on the L-shaped outside.

A pressed component 1 of the present invention is suitable for an automotive structural component, and further is suitable for a pressed component manufactured using a high-strength steel sheet for a steel sheet.

This embodiment gives a description taking a case where the pressed component 1 having portions illustrated in FIG. 4 is manufactured from a high-strength steel sheet by press forming as an example.

The shape of the pressed component 1 of this embodiment has a component shape having the top sheet portion 2, the vertical wall portion 3 contiguous to the top sheet portion 2 via the ridge portion 5B, and the corner portion 4 as illustrated in FIG. **4.** The corner portion 4 couples right and left end portions of the adjacent vertical wall portions 3 and has the ridge portion 5A in a circular arc shape projecting outward as viewed from the top sheet portion 2 side. The "as viewed from the top sheet portion 2 side" is synonymous with "in plan view". When the top sheet portion 2 is positioned on the lower side, the top sheet portion 2 is synonymous with a bottom sheet portion. The reference sign 6 indicates the flange portion contiguous to a lower end portion of the vertical wall portion 3.

Herein, the ridge portion part connecting the top sheet portion 2 and the vertical wall portion 3 to each other is also referred to as the second ridge portion 5B. The ridge portion part connecting the top sheet portion 2 and the corner portion 4 is also referred to as the first ridge portion 5A. The first ridge portion 5A and the second ridge portion 5B are contiguous to each other.

The intersection angle $\theta$ (see FIG. 2) of the two adjacent vertical wall portions 3 contiguous to the corner portion 4 is set to, for example, 80° or more and 100° or less in plan view. The intersection angle $\theta$ is preferably 85° or more and 95° or less. The angle of the vertical wall portion 3 to the top sheet portion 2 is set to, for example, 80° or more and 100° or less. The angle is preferably 85° or more and 95° or less.

Then, in this embodiment, when the height of the corner portion 4 is defined as h1 [mm], the height h2 [mm] of at least the vertical wall portion 3 on the corner portion side of the vertical wall portions 3 is designed to satisfy the condition of Formula (3),

$$15 \text{ mm} \geq h2 - h1 \geq 3 \text{ [mm]} \cdots (3).$$

The corner portion side is set to have a length equal to or less than half of the length of the vertical wall portion, for example. The length of the vertical wall portion is the length along the extension direction of the second ridge portion 5B.

Herein, the radius of curvature of the ridge portion of the corner portion as viewed from the top sheet portion side is defined as R3 [mm].

In this case, the range on the corner portion 4 side where the height of the vertical wall portion has a height h2 satisfying Formula (1) above may be defined as a section range of the distance L [mm] in the direction along the extension direction of the ridge portion from the coupling position with the corner portion 4. The distance L is designed to satisfy Formula (4) below,

$$0.5 \times R3 \leq L \leq 1.5 \times R3 \cdots (4).$$

In the connection between the corner portion 4 and the vertical wall portion 3 contiguous to the corner portion 4, the height is preferably gradually changed. More specifically, the height h1 of the corner portion 4 and the height h2 of the vertical wall portion 3 contiguous to the corner portion 4 are preferably gradually changed in transition from the corner portion 4 to the vertical wall portion 3. In this case, the section where the height is gradually changed (gradual change section) is preferably set as the distance L described above. More specifically, the distance L is set to satisfy $0.5 \times R3 \leq L \leq 1.5 \times R3$. This is because, when the distance L is less than $0.5 \times R3$, the change from h1 to h2 is excessively steep, so that cracking occurs in the connection portion, and, when L is $1.5 \times R3$ or more, the change from h1 to h2 is excessively gradual, and therefore the movement of the material cannot be sufficiently inhibited, reducing the cracking suppression effect of the corner portion.

As described above, the gradual change section has a range on the corner portion side where the height of the vertical wall portion 3 has the height h2 satisfying Formula (3) above. For example, in the range where the distance L is from 0.5 × R3 to 1.5 × R3, the height of the vertical wall portion 3 is the height h2 satisfying Formula (3) above.

The radius of curvature along the vertical direction of each of the ridge portions 5 from the top sheet portion 2 to the vertical wall portion 3 and the corner portion 4 is designed as follows. More specifically, when the radius of curvature in the corner portion 4 is defined as R1 [mm], the radius of curvature R2 [mm] in each of the right and left vertical wall portions 3 coupled to the corner portion 4 may be designed to satisfy the condition of Formula (1),

$$5.0 \geq R1/R2 \geq 1.2 \cdots (1).$$

Herein, the radius of curvature of the ridge portion 5 of the corner portion 4 (radius of curvature in a circular arc shape projecting outward) as viewed from the top sheet portion 2 side illustrated in FIG. 2 is defined as R3 [mm].

In this embodiment, the radius of curvature R1 of the first ridge portion 5A and the radius of curvature of the second ridge portion 5B are different from each other. Therefore, the connection between the first ridge portion 5A and the second ridge portion 5B has a section where the radius of curvature of the second ridge portion 5B is gradually changed along the extension direction of the ridge portion 5.

The section where the radius of curvature is gradually changed is set in the range of the distance L [mm] in the direction along the extension direction of the ridge portion 5 from the connection position where the vertical wall portion 3 is connected to the corner portion 4. The section with the distance L is also referred to as a gradual change section.

The distance L of the gradual change section is preferably set to satisfy "0.5 × R3 ≤ L ≤ 1.5 × R3".

This is for the following reasons. When the distance L is less than 0.5 × R3, the degree of the change in radius of curvature from R1 to R2 is excessively steep, which poses a risk that cracking occurs in the connection portion between the vertical wall portion 3 and the corner portion 4. When L is 1.5 × R3 or more, the change from R1 to R2 is excessively gradual, and therefore the movement of the material cannot be sufficiently inhibited, reducing the cracking suppression effect of the corner portion 4.

At least the second ridge portion 5B satisfying Formula (1) above may be set in the gradual change section with the distance L. Specifically, at least a position farthest from the corner portion 4 of the gradual change section has the radius of curvature satisfying Formula (1).

More specifically, the range of the ridge portion 5 in the vertical wall portion 3 where the radius of curvature in the vertical wall portion 3 has R2 [mm] satisfying Formula (1) may be a range containing at least the range of the distance L [mm] in the direction along the extension direction of the ridge portion 5 from the coupling position with the corner portion 4 (see FIG. 3). The distance L may be designed to satisfy the following Formula (2),

$$0.5 \times R3 \leq L \leq 1.5 \times R3 \cdots (2).$$

Formula (2) is the same formula as Formula (4).

More specifically, a region where the radius of curvature of the second ridge portion 5B is set to the radius of curvature R2 satisfying Formula (1) does not have to be the entire second ridge portion 5B of the vertical wall portion 3, and may be only a region in the vicinity of the corner portion 4. Specifically, a part of the second ridge portion 5B in the range of 1.5 × R3 from the connection portion of the first ridge portion 5A of the corner portion 4 to the second ridge portion 5B may satisfy the condition of the radius of curvature R2 described above. The radius of curvature of the second ridge portion 5B at a position further than 1.5 × R3 from the corner portion 4 can be set to any size.

Herein, the contour shapes of the ridge portions 5 each do not have to be a circular arc shape with the same radius of curvature. Each radius of curvature R1, R2, R3 takes, for example, the average radius of curvature of the circular arc shape along the target ridge portion 5. Alternatively, the radius of curvature in a center portion of the circular arc or the maximum radius of curvature value is applied.

(Manufacturing method)

To the above-described pressed component 1, known press forming methods, such as stretch forming, may be applied. For example, the die including the upper die 20 and the punch 21 as illustrated in FIG. 3 is used. Then, the blank material 10 containing a steel sheet is restrained with the upper die 20 and the blank holder 22, and pressed by stroking the punch 21, thereby forming the blank material 10 into a target component shape. At this time, for example, the die is designed such that the reference sign 21A designating the punch shoulder R has the radius of curvature of the above-described press shape, or the shape, for example, of a shoulder portion of the punch 21 is adjusted.

(Operation and others)

This embodiment makes it possible to more simply form a shape, with high designability, having a square-cylindrical corner portion or a corner portion having an L-shaped outside to be manufactured using a high-strength steel sheet.

In this embodiment, the height h2 of the vertical wall portion 3 contiguous to the corner portion 4 is set to be larger than the height h1 of the corner portion 4, so that the material movement in the extension direction of the ridge portion is suppressed.

The relation between h1 and h2 is set to satisfy 15 [mm] ≥ h2 - h1 ≥ 3 [mm].

When "h2 - h1" is less than 3 [mm], the difference between h1 and h2 is excessively small, so that the effect of suppressing the material movement in the extension direction of the ridge portion cannot be obtained. Desirably, h2 - h1 ≥ 5 [mm] is satisfied. When h2 - h1 exceeds 15 [mm], the difference in the vertical wall height is excessively large, which increases the risk of the occurrence of cracking.

Further, for the radius of curvature in the vertical direction of the ridge portion 5, the radius of curvature R2 in the vertical wall portion 3 contiguous to the corner portion 4 may be set to be smaller than the radius of curvature R1 in the corner portion 4.

This further suppresses the material movement in the extension direction of the ridge portion 5 in the corner portion 4 more than before in press forming. As a result, even when a high-strength steel sheet is applied to the material, the material of the corner portion 4 is further suppressed from being pulled to the ridge portion 5 side of the vertical wall portion 3 in the ridge portion 5, so that cracking in the corner portion 4 can be further suppressed.

At this time, the relation between the radius of curvature R1 and the radius of curvature R2 may be set to safety "5.0 ≥ R1/R2 ≥ 1.2".

When R1/R2 is less than 1.2, the difference between R1 and R2 is small, which poses a risk that the effect of suppressing the material movement in the extension direction of the ridge portion 5 cannot be obtained. When R1/R2 is 5.0 or more, there is a risk that the radius of curvature R2 of the second ridge portion 5B in the vertical wall portion 3, i.e., the radius of curvature R2 of the second ridge portion 5B contiguous to the first ridge portion 5A of the corner portion 4, is excessively small, which increases a risk of the occurrence of cracking in the second ridge portion 5B.

(Others)

The present disclosure can take the following configurations

(1) An automotive structural component, being a press formed article containing a steel sheet as a material, having: a top sheet portion; a vertical wall portion contiguous to the top sheet portion via a ridge portion; and a corner portion coupling right and left end portions of the adjacent vertical wall portions and having a ridge portion in a circular arc shape projecting outward as viewed from the top sheet portion side, in which
for the radius of curvature of each of the ridge portions from the top sheet portion to the vertical wall portion and the corner portion, when the radius of curvature in the corner portion is defined as R1 [mm], a radius of curvature R2 [mm] in the vertical wall portion coupled to the corner portion satisfies the condition of Formula (1),

$$5.0 \geq R1/R2 \geq 1.2 \cdots (1).$$

(2) The radius of curvature of the ridge portion of the corner portion as viewed from the top sheet portion side is defined as R3 [mm],

the range of the ridge portion in the vertical wall portion where the radius of curvature in the vertical wall portion has R2 [mm] satisfying Formula (1) above is defined as a section range of a distance L [mm] in the direction along the extension direction of the ridge portion from the coupling position with the corner portion, and
the distance L satisfies Formula (2) below,

$$0.5 \times R3 \leq L \leq 1.5 \times R3 \cdots (2).$$

(3) When the height of the corner portion is defined as h1 [mm], a height h2 [mm] of at least the vertical wall portion on the corner portion side of the vertical wall portions satisfies the condition of Formula (3),

$$15 \ mm \geq h2 - h1 \geq 3 \ [mm] \cdots (3).$$

(4) An automotive structural component, being a press formed article containing a steel sheet as a material, having: a top sheet portion; a vertical wall portion contiguous to the top sheet portion via a ridge portion; and a corner portion coupling right and left end portions of the adjacent vertical wall portions and having a ridge portion in a circular arc shape projecting outward as viewed from the top sheet portion side, in which
when the height of the corner portion is defined as h1 [mm], a height h2 [mm] of at least the vertical wall portion on the corner portion side of the vertical wall portions satisfies the condition of Formula (3),

$$15 \text{ mm} \geq h2 - h1 \geq 3 \text{ [mm]} \cdots (3).$$

(5) The radius of curvature of the ridge portion of the corner portion as viewed from the top sheet portion side is defined as R3 [mm],

the range on the corner portion side where the height of the vertical wall portion has the height h2 satisfying Formula (3) above is defined as a section range of the distance L [mm] in the direction along the extension direction of the ridge portion from the coupling position with the corner portion, and
the distance L satisfies Formula (4) below,

$$0.5 \times R3 \leq L \leq 1.5 \times R3 \cdots (4).$$

(6) The steel sheet is a high-strength steel sheet with a tensile strength of 980 MPa or more.
(7) A method for manufacturing a pressed component including: press-forming a steel sheet to manufacture a pressed component in a shape having a top sheet portion, a vertical wall portion contiguous to the top sheet portion via a ridge portion, and a corner portion coupling right and left end portions of the adjacent vertical wall portions and having a ridge portion in a circular arc shape projecting outward as viewed from the top sheet portion side, in which
for the radius of curvature of each of the ridge portions from the top sheet portion to the vertical wall portion and the corner portion, when the radius of curvature in the corner portion is defined as R1 [mm], a radius of curvature R2 [mm] in the vertical wall portion coupled to the corner portion is designed to satisfy the condition of Formula (1),

$$5.0 \geq R1/R2 \geq 1.2 \cdots (1).$$

(8) The radius of curvature of the ridge portion of the corner portion as viewed from the top sheet portion side is defined as R3 [mm],

the range of the ridge portion in the vertical wall portion where the radius of curvature in the vertical wall portion has R2 [mm] satisfying Formula (1) above is defined as a section range of a distance L [mm] in the direction along the extension direction of the ridge portion from the coupling position with the corner portion, and
the distance L is designed to satisfy Formula (2) below,

$$0.5 \times R3 \leq L \leq 1.5 \times R3 \cdots (2).$$

(9) When the height of the corner portion is defined as h1 [mm], a height h2 [mm] of at least the vertical wall portion on the corner portion side of the vertical wall portion is designed to satisfy the condition of Formula (3),

$$15 \text{ mm} \geq h2 - h1 \geq 3 \text{ [mm]} \cdots (3).$$

(10) A method for manufacturing a pressed component including: press-forming a steel sheet to manufacture a pressed component in a shape having a top sheet portion, a vertical wall portion contiguous to the top sheet portion via a ridge portion, and a corner portion coupling right and left end portions of the adjacent vertical wall portions and having a ridge portion in a circular arc shape projecting outward as viewed from the top sheet portion side, in which
when the height of the corner portion is defined as h1 [mm], a height h2 [mm] of at least the vertical wall portion on the corner portion side of the vertical wall portion is designed to satisfy the condition of Formula (3),

$$15 \text{ mm} \geq h2 - h1 \geq 3 \text{ [mm]} \cdots (3).$$

(11) The radius of curvature of the ridge portion of the corner portion as viewed from the top sheet portion side is defined as R3 [mm],

the range on the corner portion side where the height of the vertical wall portion has the height h2 satisfying Formula (3) above is defined as a section range of the distance L [mm] in the direction along the extension direction of the ridge portion from the coupling position with the corner portion, and

the distance L is designed to satisfy Formula (4) below,

$$0.5 \times R3 \leq L \leq 1.5 \times R3 \cdots (4).$$

(12) The steel sheet is a high-strength steel sheet with a tensile strength of 980 MPa or more.

EXAMPLES

(Comparative Example 1)

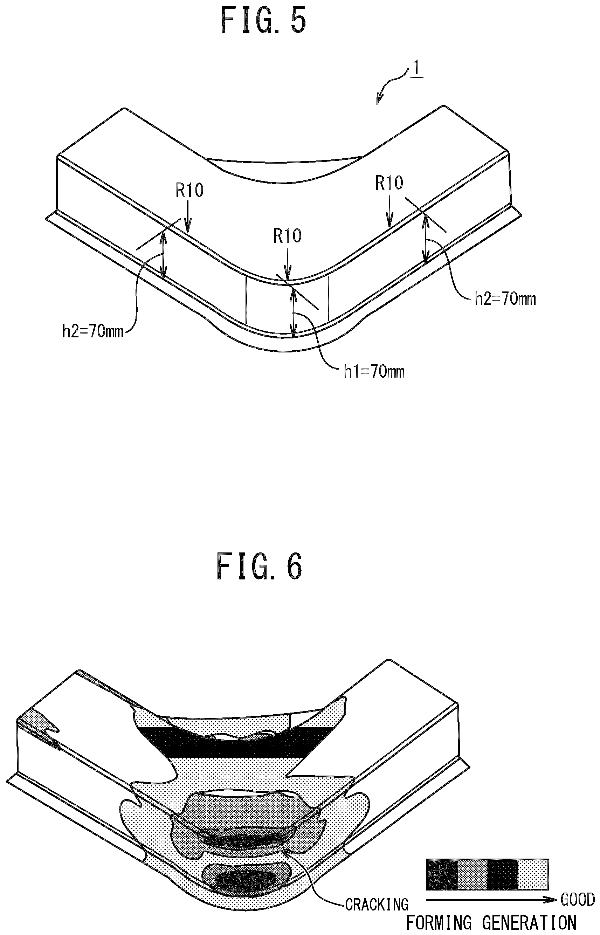

A component of Comparative Example 1 has a component shape having an L-shape in plan view as illustrated in FIG. 5.

In Comparative Example 1, a steel sheet (blank material) containing a 1.5 GPa material and having a sheet thickness of 1.4 [mm] was used. Then, the component shape above was designed such that both the radius of curvature along the vertical direction of the first ridge portion 5A and the radius of curvature along the vertical direction of the second ridge portion 5B were set to 10 [mm] and the height of the vertical wall portion 3 was set to 70 [mm], and then stretch forming was carried out.

The angle of the vertical wall portion 3 to the top sheet portion 2 was designed to be 90° and the intersection angle $\theta$ of the adjacent vertical wall portions 3 was designed to be 90°. In Comparative Example 1, cracking occurred in the corner portion 4 when press-forming was carried out as illustrated in FIG. 6.

(Example 1)

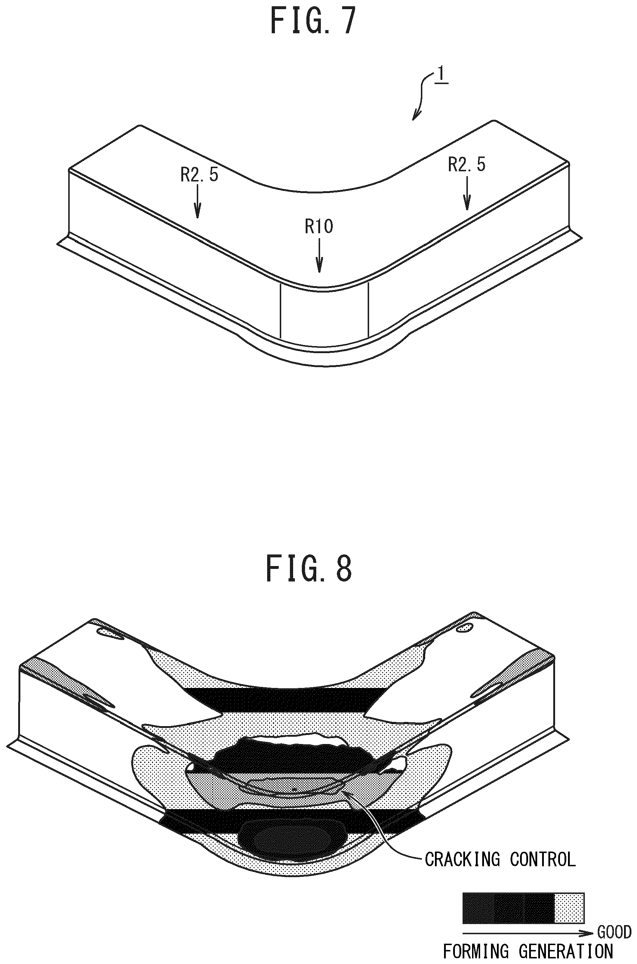

In Example 1, the radius of curvature of the second ridge portion 5B in each of the right and left vertical wall portions 3 was changed to 2.5 [mm] as illustrated in FIG. 7. The shape was designed under the same pressing conditions as those in Comparative Example 1 except the above, and then press forming was carried out. In Example 1, R1/R2 = (10/2.5) = 4 was established.

In the basic shape of Comparative Example 1, all of the ridge portion 5 regions had the same radius of curvature or had a sharp shape. In contrast thereto, in Example 1, cracking in the first ridge portion of the corner portion, where cracking occurred in the basic shape of Comparative Example 1, was suppressed as illustrated in the strain distribution in FIG. 8.

(Example 2)

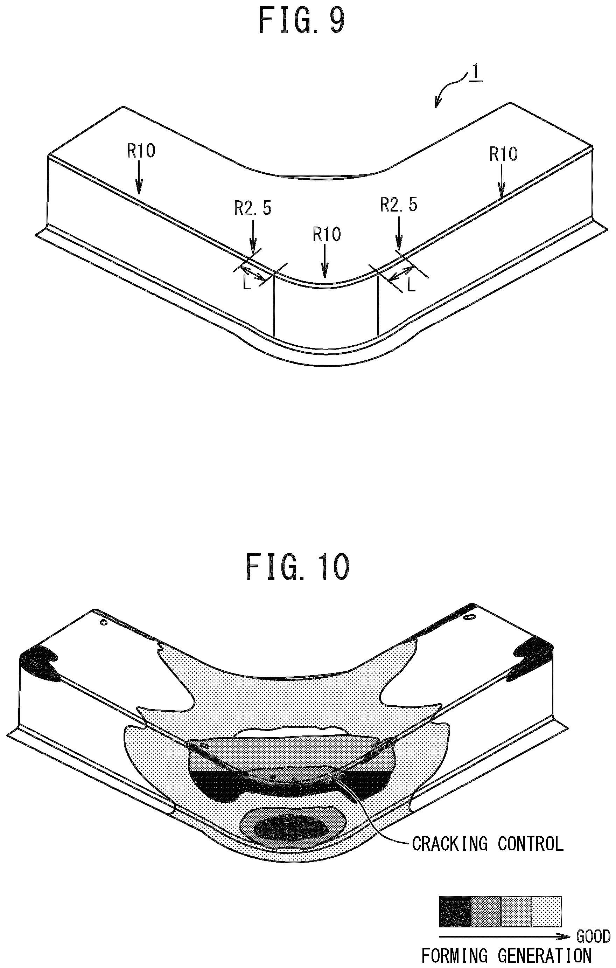

In the second embodiment, as illustrated in FIG. 9, only the radius of curvature in a part of the second ridge portion in the vicinity of the corner portion of the second ridge portion was designed to be 2.5 [mm].

More specifically, in Example 2, the radius of curvature was set to 2.5 [mm] at the end position (position farthest from the corner portion) of the gradual change section with the distance L. As the distance L, the radius of curvature of the corner portion 4 was set to R3 × 0.5. Then, the radius of curvature R2 of the second ridge portion 5B was set to 2.5 [mm] only in a range where the distance from the corner portion 4 ranged from the radius of curvature R3 × 0.5 to the radius of curvature R3 × 1.5.

The second ridge portion 5 linearly extends, and therefore the gradual change section where the radius of curvature is changed from 2.5 [mm] to 10.0 [mm] may be short.

In this second example, the ridge portion 5 has the same radius of curvature or a sharp shape in all of the regions relative to the basic shape. However, as illustrated in FIG. 10, cracking in the ridge portion of the corner portion 4, where cracking occurred in the basic shape, was suppressed.

(Example 3)

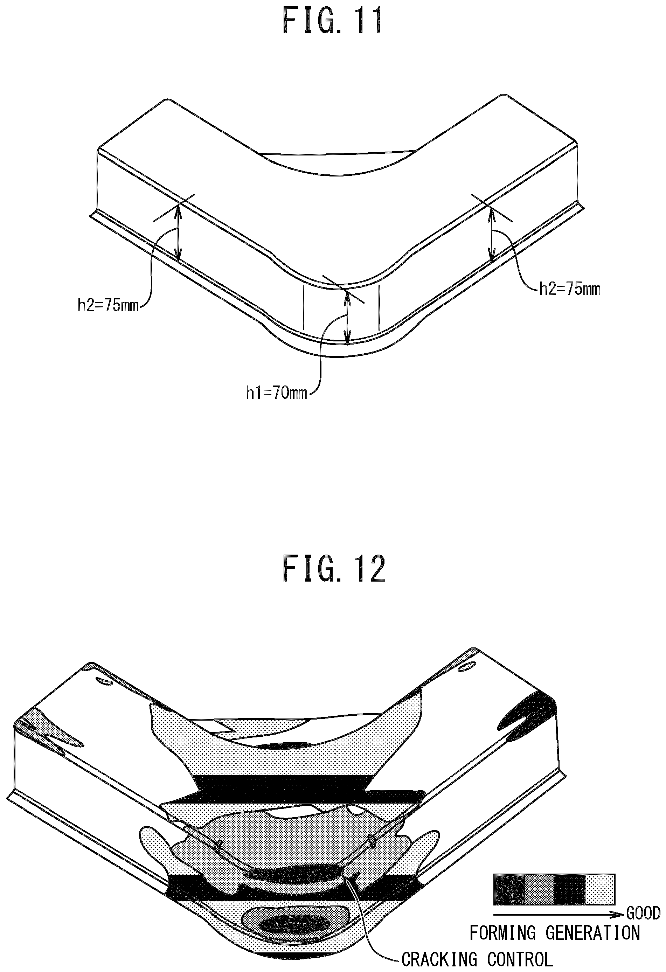

In Example 3, as illustrated in FIG. 11, the height h2 of each of the right and left vertical wall portions was set to 73 [mm], which was changed to be 3 [mm] higher than the height h1 of the corner portion. The shape was designed under the same pressing conditions as those in Comparative Example 1 except the above, and then press forming was carried out.

In the basic shape of Comparative Example 1, all of the ridge portion 5 regions had the same radius of curvature or had a sharp shape. In contrast thereto, in Example 3, cracking in the first ridge portion of the corner portion, where cracking occurred in the basic shape of Comparative Example 1, was suppressed as illustrated in the strain distribution in FIG. 12.

(Example 4)

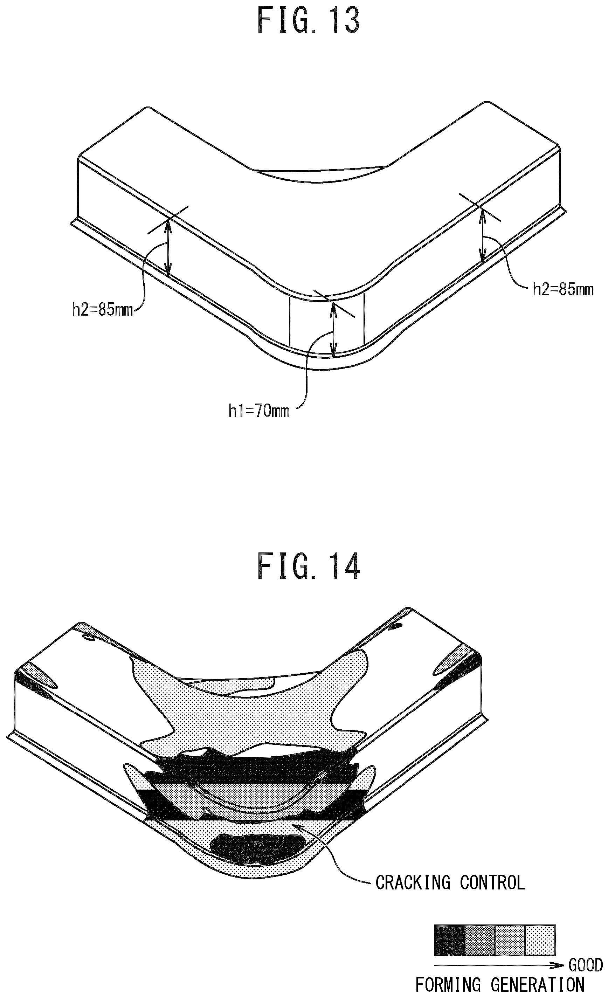

In the second embodiment, as illustrated in FIG. 13, the height h2 of each of the right and left vertical wall portions was set to 85 [mm], which was changed to be 15 [mm] higher than the height h1 of the corner portion. The shape was designed under the same pressing conditions as those in Comparative Example 1 except the above, and then press forming was carried out.

Although the forming depth is equal or large in all of the regions relative to the basic shape of Comparative Example 1 in a comparison of the shapes, cracking in the corner portion was suppressed as illustrated in FIG. 14.

A comparison between Example 1 and Example 2 shows that the effect is higher the larger "h2 - h1" is.

Reference Signs List

1: pressed component
2: top sheet portion
3: vertical wall portion
4: corner portion
5: ridge portion
5A: ridge portion (first ridge portion)
5B: ridge portion (second ridge portion)
10: blank material
20: upper die
21: punch
22: blank holder
L: distance
R1: radius of curvature in corner portion
R2: radius of curvature in vertical wall portion
R3: radius of curvature in plan view in corner portion
h1: height of corner portion
h2: height of vertical wall portion

**Claims**

1. An automotive structural component, being a press formed article containing a steel sheet as a material, comprising:

   a top sheet portion; a vertical wall portion contiguous to the top sheet portion via a ridge portion; and a corner portion coupling right and left end portions of the adjacent vertical wall portions and having a ridge portion in a circular arc shape projecting outward as viewed from a side of the top sheet portion, wherein
   for a radius of curvature of each of the ridge portions from the top sheet portion to the vertical wall portion and the corner portion, when a radius of curvature in the corner portion is defined as R1 [mm], a radius of curvature R2 [mm] in the vertical wall portion coupled to the corner portion satisfies a condition of Formula (1),

$$5.0 \geq R1/R2 \geq 1.2 \cdots (1).$$

2. The automotive structural component according to claim 1, wherein

   a radius of curvature of the ridge portion of the corner portion as viewed from the side of the top sheet portion is defined as R3 [mm],
   a range of the ridge portion in the vertical wall portion where the radius of curvature in the vertical wall portion has R2 [mm] satisfying Formula (1) above is defined as a section range of a distance L [mm] in a direction along an extension direction of the ridge portion from a coupling position with the corner portion, and
   the distance L satisfies Formula (2) below,

$$0.5 \times R3 \leq L \leq 1.5 \times R3 \cdots (2).$$

3. The automotive structural component according to claim 1 or 2, wherein, when a height of the corner portion is defined as h1 [mm], a height h2 [mm] of at least the vertical wall portion on a side of the corner portion of the vertical wall portions satisfies a condition of Formula (3),

$$15 \text{ mm} \geq h2 - h1 \geq 3 \text{ [mm]} \cdots (3).$$

4. An automotive structural component, being a press formed article containing a steel sheet as a material, comprising:

a top sheet portion; a vertical wall portion contiguous to the top sheet portion via a ridge portion; and a corner portion coupling right and left end portions of the adjacent vertical wall portions and having a ridge portion in a circular arc shape projecting outward as viewed from a side of the top sheet portion, wherein when a height of the corner portion is defined as h1 [mm], a height h2 [mm] of at least the vertical wall portion on the side of the corner portion of the vertical wall portions satisfies a condition of Formula (3),

$$15 \text{ mm} \geq h2 - h1 \geq 3 \text{ [mm]} \cdots (3).$$

5. The automotive structural component according to claim 3 or 4, wherein

a radius of curvature of the ridge portion of the corner portion as viewed from the side of the top sheet portion is defined as R3 [mm],
a range on the side of the corner portion where the height of the vertical wall portion has the height h2 satisfying Formula (3) above is defined as a section range of the distance L [mm] in the direction along the extension direction of the ridge portion from a coupling position with the corner portion, and
the distance L satisfies Formula (4) below,

$$0.5 \times R3 \leq L \leq 1.5 \times R3 \cdots (4).$$

6. The automotive structural component according to any one of claims 1 to 5, wherein the steel sheet is a high-strength steel sheet with a tensile strength of 980 MPa or more.

7. A method for manufacturing a pressed component comprising:

press-forming a steel sheet to manufacture a pressed component in a shape having a top sheet portion, a vertical wall portion contiguous to the top sheet portion via a ridge portion, and a corner portion coupling right and left end portions of the adjacent vertical wall portions and having a ridge portion in a circular arc shape projecting outward as viewed from a side of the top sheet portion, wherein for a radius of curvature of each of the ridge portions from the top sheet portion to the vertical wall portion and the corner portion, when a radius of curvature in the corner portion is defined as R1 [mm], a radius of curvature R2 [mm] in the vertical wall portion coupled to the corner portion is designed to satisfy a condition of Formula (1),

$$5.0 \geq R1/R2 \geq 1.2 \cdots (1).$$

8. The method for manufacturing a pressed component according to claim 7, wherein

a radius of curvature of the ridge portion of the corner portion as viewed from the side of the top sheet portion is defined as R3 [mm],
a range of the ridge portion in the vertical wall portion where the radius of curvature in the vertical wall portion has R2 [mm] satisfying Formula (1) above is defined as a section range of a distance L [mm] in a direction along an extension direction of the ridge portion from a coupling position with the corner portion, and
the distance L is designed to satisfy Formula (2) below,

$$0.5 \times R3 \leq L \leq 1.5 \times R3 \cdots (2).$$

9. The method for manufacturing a pressed component according to claim 7 or 8, wherein, when a height of the corner portion is defined as h1 [mm], a height h2 [mm] of at least the vertical wall portion on the side of the corner portion of the vertical wall portion is designed to satisfy a condition of Formula (3),

$$15 \text{ mm} \geq h2 - h1 \geq 3 \text{ [mm]} \cdots (3).$$

10. A method for manufacturing a pressed component comprising:

press-forming a steel sheet to manufacture a pressed component in a shape having a top sheet portion, a vertical wall portion contiguous to the top sheet portion via a ridge portion, and a corner portion coupling right and left end portions of the adjacent vertical wall portions and having a ridge portion in a circular arc shape projecting outward as viewed from a side of the top sheet portion, wherein

when a height of the corner portion is defined as h1 [mm], a height h2 [mm] of at least the vertical wall portion on a side of the corner portion of the vertical wall portions is designed to satisfy a condition of Formula (3),

$$15 \text{ mm} \geq h2 - h1 \geq 3 \text{ [mm]} \cdots (3).$$

11. The method for manufacturing a pressed component according to claim 9 or 10, wherein

a radius of curvature of the ridge portion of the corner portion as viewed from the side of the top sheet portion is defined as R3 [mm],

a range on the side of the corner portion where the height of the vertical wall portion has the height h2 satisfying Formula (3) above is defined as a section range of the distance L [mm] in the direction along the extension direction of the ridge portion from a coupling position with the corner portion, and

the distance L is designed to satisfy Formula (4) below,

$$0.5 \times R3 \leq L \leq 1.5 \times R3 \cdots (4).$$

12. The method for manufacturing a pressed component according to any one of claims 7 to 11, wherein the steel sheet is a high-strength steel sheet with a tensile strength of 980 MPa or more.

# FIG. 1

# FIG. 2

# FIG. 3

# FIG. 4

# FIG. 5

# FIG. 6

CRACKING

FORMING GENERATION → GOOD

# FIG. 7

# FIG. 8

CRACKING CONTROL

GOOD
FORMING GENERATION

# FIG. 9

# FIG. 10

CRACKING CONTROL

FORMING GENERATION ——————→ GOOD

# FIG. 11

h2=75mm

h2=75mm

h1=70mm

# FIG. 12

CRACKING CONTROL

GOOD

FORMING GENERATION

# FIG. 13

h2=85mm

h2=85mm

h1=70mm

# FIG. 14

CRACKING CONTROL

GOOD

FORMING GENERATION

## INTERNATIONAL SEARCH REPORT

| International application No. |
|---|
| **PCT/JP2023/032797** |

### A. CLASSIFICATION OF SUBJECT MATTER

***B62D 25/04***(2006.01)i; ***B21D 22/20***(2006.01)i; ***B21D 22/26***(2006.01)i; ***B21D 53/88***(2006.01)i
FI:　B62D25/04 A; B21D22/26 D; B21D53/88 Z; B21D22/20 E

According to International Patent Classification (IPC) or to both national classification and IPC

### B. FIELDS SEARCHED

Minimum documentation searched (classification system followed by classification symbols)

B62D17/00-25/08; B62D25/14-29/04; B21D22/20; B21D22/26; B21D53/88

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X | WO 2015/064175 A1 (JFE STEEL CORP) 07 May 2015 (2015-05-07) | 4, 10 |
| Y | paragraphs [0007], [0012], [0015]-[0025], [0046]-[0047], [0059]-[0062], fig. 1-7 | 1-3, 5-9, 11-12 |
| Y | JP 2010-174617 A (TOYOURA KK) 12 August 2010 (2010-08-12) paragraphs [0001], [0014]-[0023], fig. 1-3 | 1-3, 6-9, 12 |
| Y | JP 2022-80353 A (JFE STEEL CORP) 30 May 2022 (2022-05-30) paragraphs [0016]-[0030], fig. 1-3, 5 | 2, 5, 8, 11 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **09 November 2023** | **21 November 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (January 2015)

## INTERNATIONAL SEARCH REPORT
### Information on patent family members

International application No.

**PCT/JP2023/032797**

| Patent document cited in search report | | | Publication date (day/month/year) | Patent family member(s) | Publication date (day/month/year) |
|---|---|---|---|---|---|
| WO | 2015/064175 | A1 | 07 May 2015 | JP 5708757 B1<br>US 2016/0243604 A1<br>paragraphs [0009], [0014], [0045]-[0058], [0089]-[0091], [0103]-[0106], fig. 1-7<br>EP 3064288 A1<br>KR 10-2016-0063377 A<br>CN 105682820 A<br>MX 2016005459 A | |
| JP | 2010-174617 | A | 12 August 2010 | (Family: none) | |
| JP | 2022-80353 | A | 30 May 2022 | (Family: none) | |

Form PCT/ISA/210 (patent family annex) (January 2015)

22

**REFERENCES CITED IN THE DESCRIPTION**

**Patent documents cited in the description**

- JP 5867657 B
- JP 5952881 B